# EUROPEAN PATENT SPECIFICATION

(11) **EP 2 674 454 B1**
(45) Date of publication and mention of the grant of the patent: **14.01.2015**
(21) Application number: 13171581.5
(22) Date of filing: 12.06.2013
(51) Int. Cl.: C08L 9/06, B60C 1/00

(54) **Pneumatic tire**
Luftreifen
Pneu

(30) Priority: 13.06.2012 US 201213495339
(43) Date of publication of application: 18.12.2013
(73) Proprietor: The Goodyear Tire & Rubber Company, Akron, Ohio 44316 (US)
(72) Inventor: Steiner, Pascal Patrick, L-9233 Diekirch (LU); Mruk, Ralf, L-9164 Lipperscheid (LU); Schulmeister, Klaus, 63755 Alzenau (DE); Kanz, Carlo, L-8249 Mamer (LU); Delville, Jerome, F54430 Rehon (FR)
(74) Representative: Kutsch, Bernd

(56) References cited:
- EP-A1- 1 911 797
- EP-A1- 2 194 090
- EP-A1- 2 325 241
- EP-A1- 2 412 731
- EP-A1- 2 433 812
- EP-A1- 2 455 232
- EP-A1- 2 460 670
- WO-A1-2011/148965
- JP-A- 2008 297 493

## Description

### Background

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubbery material for automobile tire treads.

EP-A- 2 433 812 describes a rubber composition for a tread of a tire comprising solution-polymerized styrene-butadiene rubber, cis-1,4 polybutadiene, processing oil, carbon black, silica, sulfur containing organosilicon compound and a resin such as polyterpene.

EP-A- 2 460 670 describes a tire comprising a rubber composition comprising styrene-butadiene rubber, a low PCA process oil, carbon black, silica, a sulfur containing organosilicon compound and a resin.

EP-A- 2 325 241 describes a pneumatic tire comprising a rubber composition comprising solution-polymerized styrene-butadiene rubber and polybutadiene.

EP-A- 2 455 232 describes a rubber composition and a respective tire wherein the tire composition comprises styrene-butadiene rubber and at least one additional diene based elastomer together with a tackifying resin such as a terpene resin.

WO-A- 2011/148965 describes a rubber composition for a tire tread comprising emulsion-polymerized styrene-butadiene rubber, solution-polymerized styrene-butadiene rubber and natural rubber.

Further rubber compositions comprising solution-polymerized styrene-butadiene rubbers in various compositions are described in EP-A- 2 194 090, EP-A-1 911 797, EP-A- 2 412 731 and J P-A- 2008-297493.

### Summary of the Invention

The invention is directed to a pneumatic tire in accordance with claim 1. Dependent claims refer to preferred embodiments of the invention.

In a preferred aspect, the invention is directed to a pneumatic tire having a tread comprising a vulcanizable rubber composition comprising, expressed as parts by weight per 100 parts by weight of elastomer (phr),
(A) 100 phr of a solution-polymerized styrene-butadiene rubber with a bound styrene content of from 20 to 50 percent by weight, a vinyl 1,2 content of from 10 to 40 percent by weight based on the rubber weight, and a Tg of from -40ºC to - 10ºC;
(B) 5 to 60 phr of a low PCA process oil having a polycyclic aromatic content of less than 3 percent by weight as determined by the IP346 method;
(C) 90 to 150 phr of silica having a CTAB specific surface area (S_{CTAB}) of between 40 and 525 m²/g, a BET specific surface area (S_{BET}) of between 45 and 550 m²/g;
(D) 10 to 20 phr of sulfur containing organosilicon compound;
(E) 5 to 30 phr of a polyterpene resin, and
(F) less than 10 phr of carbon black.

### Description of the Invention

A pneumatic tire is disclosed having a tread comprising a vulcanizable rubber composition comprising, expressed as parts by weight per 100 parts by weight of elastomer (phr),
(A) 100 phr of a solution-polymerized styrene-butadiene rubber with a bound styrene content of from 20 to 50 percent by weight, a vinyl 1,2 content of from 10 to 40 percent by weight based on the rubber weight, and a Tg of from -40ºC to - 10ºC;
(B) 5 to 60 phr of a low PCA process oil having a polycyclic aromatic content of less than 3 percent by weight as determined by the IP346 method;
(C) 90 to 150 phr of silica having a CTAB specific surface area (S_{CTAB}) of between 40 and 525 m²/g, a BET specific surface area (S_{BET}) of between 45 and 550 m²/g;
(D) 10 to 20 phr of sulfur containing organosilicon compound;
(E) 5 to 30 phr of a polyterpene resin, and
(F) less than 10 phr of carbon black.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art.

One component of the rubber composition is 100 phr of a solution-polymerized styrene-butadiene rubber with a bound styrene content of from 20 to 50 percent by weight, a vinyl 1,2 content of from 10 to 40 percent by weight based on the rubber weight, and a Tg of from -40ºC to -10ºC. In one embodiment, the solution-polymerized styrene-butadiene rubber has a bound styrene content of from 30 to 50 percent by weight.

As the solution polymerized styrene-butadiene rubber, suitable solution polymerized styrene-butadiene rubbers may be made, for example, by organo lithium catalyzation in the presence of an organic hydrocarbon solvent. The polymerizations employed in making the rubbery polymers are typically initiated by adding an organolithium initiator to an organic polymerization medium that contains the monomers. Such polymerizations are typically carried out utilizing continuous polymerization techniques. In such continuous polymerizations, monomers and initiator are continuously added to the organic polymerization medium with the rubbery polymer synthesized being continuously withdrawn. Such continuous polymerizations are typically conducted in a multiple reactor system. Suitable polymerization methods are known in the art, for example as disclosed in US-A-4,843,120; US-A- 5,137,998; US-A- 5,047,483; US-A- 5,272,220; US-A- 5,239,009; US-A- 5,061,765; US-A- 5,405,927; US-A- 5,654,384; US-A- 5,620,939; US-A-5,627,237; US-A- 5,677,402; US-A- 6,103,842; and US-A- 6,559,240.

As the solution polymerized styrene-butadiene rubber, suitable solution polymerized styrene-butadiene rubbers are available commercially, such as Dow SE-SLR® 6430. Such solution polymerized styrene-butadiene rubber may be tin- or silicon-coupled, as is known in the art. In one embodiment, suitable SSBR may be at least partially silicon-coupled.

As the rubber composition includes 100 phr of the specific styrene-butadiene rubber, the rubber composition may be exclusive of other elastomers. Excluded elastomers include but are not limited to polybutadiene, natural rubber, synthetic polyisoprene, and the like, and styrene-butadiene rubbers having at least one of styrene content, vinyl 1,2 content, and Tg outside the ranges noted above for the included styrene-butadiene rubber.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The rubber composition may also include from 5 to 60 phr of processing oil. In one embodiment, the rubber composition includes from 30 to 60 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. In one embodiment, the rubber composition includes a low PCA oil. Suitable low PCA oils include but are not limited to mild extraction solvates (MES), treated distillate aromatic extracts (TDAE), residual aromatic extract (RAE), SRAE, and heavy napthenic oils as are known in the art; see for example US-A- 5,504,135; US-A- 6,103,808; US-A- 6,399,697; US-A- 6,410,816; US-A- 6,248,929; US-A- 6,146,520; US-A- 2001/00023307; US-A- 2002/0000280; US-A- 2002/0045697; US-A- 2001/0007049; EP-A- 0839891; JP-A- 2002097369; ES-A- 2122917.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

A polyterpene resin is used in the rubber composition and is generally present in an amount ranging from 5 to 30 phr, with a range of from 10 to 20 phr being preferred. Terpene polymers are commercially produced from polymerizing a mixture of beta pinene in mineral spirits. The resin is usually supplied in a variety of melting points ranging from 10°C to 135°C. Suitable polyterpene resins are available commercially for example as Sylvares TR B115 from Arizona Chemical.

The vulcanizable rubber composition may include from 90 to 150 phr of a high structure silica. In one embodiment the rubber composition may include from 100 to 130 phr.

The rubber composition includes a high structure silica. By high structure, it is meant that the silica has a relatively high specific surface area. Suitable high structure silica may be produced following the methods of US-A- 2005/0032965. The characterization of the high structure silica is done as described in US-A-2005/0032965, paragraphs [0055] to [0185], incorporated herein by reference.

The high structure silica according to the invention are preferably prepared by the preparation process according to US-A- 2005/0032965 and characterized as described therein.

The presence of carbon black in the rubber composition is preferably kept to a minimum. Carbon black is added only to effect a desired black coloring to the composition. The amount of carbon black then is no more than 10 phr, or a range of 0 to 10 phr. In one embodiment, the amount of carbon black is no more than 2 phr, or a range of 0 to 2 phr. In one embodiment, the amount of carbon black is no more than 1 phr, or a range of 0 to 1 phr. Carbon black may be introduced into the rubber composition as a carrier for another additive, as for example a mixture of carbon black and a sulfur containing organosilicon compound. Such mixtures are used for ease of handling of the sulfur containing organosilicon compound.

In one embodiment the rubber composition for use in the tire tread may contain a conventional sulfur containing organosilicon compound. Examples of suitable sulfur containing organosilicon compounds are of the formula:

Z - Alk - Sₙ - Alk - Z I

in which Z is selected from the group consisting of 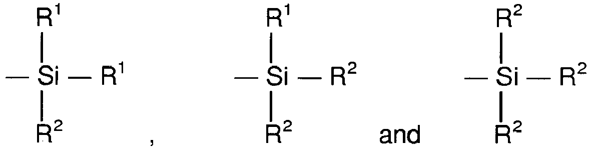 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) sulfides. In one embodiment, the sulfur containing organosilicon compounds are 3,3'-bis(triethoxysilylpropyl) disulfide and 3,3'-bis(triethoxysilylpropyl) tetrasulfide. Therefore, as to formula I, Z may be 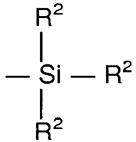 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

The amount of the sulfur containing organosilicon compound in a rubber composition will vary depending on the level of other additives that are used. Generally speaking, the amount of the compound will range from 0.5 to 20 phr. In one embodiment, the amount will range from 10 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The rubber composition includes a α, ω-bis(N,N'-dihydrocarbylthiocarbamamoyldithio)alkanes. In one embodiment, the α, ω-bis(N,N'-dihydrocarbylthiocarbamamoyldithio)alkane is selected from the group consisting of 1,2-bis(N,N'-dibenzylthiocarbamoyl-dithio)ethane; 1,3-bis(N,N'-dibenzylthiocarbamoyldithio)propane; 1,4-bis(N,N'-dibenzylthiocarbamoyldithio)butane; 1,5-bis(N,N'-dibenzylthiocarbamoyl-dithio)pentane; 1,6-bis(N,N'-dibenzylthiocarbamoyldithio)hexane; 1,7-bis(N,N'-dibenzylthiocarbamoyldithio)heptane; 1,8-bis(N,N'-dibenzylthiocarbamoyldithio)octane; 1,9-bis(N,N'-dibenzylthiocarbamoyldithio)nonane; and 1,10-bis(N,N'-dibenzylthiocarbamoyldithio)decane. In one embodiment, the α, ω -bis(N,N'-dihydrocarbylthiocarbamamoyldithio)alkane is 1,6-bis(N,N'-dibenzylthiocarbamoyldithio)hexane available as Vulcuren® from Bayer.

In one embodiment, the rubber composition includes a α, w -bis(N,N'-dihydrocarbylthiocarbamamoyldithio)alkane is an amount ranging from 1 to 4 phr. In one embodiment, the rubber composition includes a α, ω -bis(N,N'-dihydrocarbylthiocarbamamoyldithio)alkane is an amount ranging from 1.5 to 3 phr.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the compound is a tread or a tread cap compound.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### Example 1

In this example, five rubber compounds are compared. Samples 1 and 2 represent control samples. Sample 3 is representative of the present invention.

The elastomers were compounded in a multi-stage mix procedure with standard amounts of conventional curatives and processing aids as indicated in Table 1 (all amounts in phr), and cured with a standard cure cycle (10 minute at 170 °C). Cured samples were evaluated for various physical properties following standard tests protocols as indicated in Table 2. Tires having tread made from compounds of samples 1 to 3 were tested for various performance criteria as shown in Table 3 (values normalized to the control = 100).

**Table 1**

| **Sample** | **1** | **2** | **3** |
|---|---|---|---|
| | **control** | **control** | **inventive** |
| Solution SBR ¹ | 75 | 35 | 100 |
| Solution SBR ² | 0 | 55 | 0 |
| Polybutadiene ³ | 25 | 0 | 0 |
| Polybutadiene ⁴ | 0 | 10 | 0 |
| Oil ⁵ | 28.1 | 29.75 | 45.5 |
| Silica ⁶ | 90 | 0 | 0 |
| Silica ⁷ | 0 | 106 | 117 |
| Carbon black ⁸ | 10 | 6 | 1 |
| Resins ⁹ | 15 | 12 | 0 |
| Resins ¹⁰ | 0 | 0 | 16 |
| Coupling agent ¹¹ | 8.6 | 1 | 1 |
| Coupling agent ¹² | 0 | 9.9 | 11.7 |
| Waxes ¹³ | 1.5 | 1.9 | 1.9 |
| Fatty acids | 4 | 2.5 | 3 |
| Antidegradant ¹⁴ | 4 | 4.8 | 4.8 |
| Zinc oxide | 0.5 | 2.5 | 0.8 |
| Fatty acid salts | 0 | 2 | 2 |
| Sulfur | 0.6 | 1.7 | 0.8 |
| Accelerators ¹⁵ | 1.9 | 5.6 | 3.2 |
| Accelerator ¹⁶ | 2.2 | 0 | 2.2 |

| | | | |
|---|---|---|---|
| ¹ Sprintan® SLR6430 SSBR, 40% styrene, 14% vinyl, Tg (OE) = -29°C, , from Styron Schkopau ² Tufdene® E680 SSBR, 34% styrene, 38% vinyl, Tg(OE) = -25°C, from Asahi Chemical ³ Polybutadiene produced with a neodymium catalyst ⁴ Budene®1207 from Goodyear Tire & Rubber Chemical ⁵ SRAE & TDAE oil ⁶ Precipitated Silica, BET Nitrogene Surface Area = 160 m2/g ⁷ Precipitated Silica, BET Nitrogene Surface Area = 210 m2/g, Width of pore size distribution by Hg porosimetry = 1.1 ⁸ N-234 and N-330 ⁹ Alphamethyl styrene resin and coumarone-indene resin ¹⁰ Polyterpene resin ¹¹ Bis(triethoxysilylpropyl) tetrasulfide ¹² Bis(triethoxysilylpropyl) disulfide ¹³ Microcrystalline & paraffinic waxes ¹⁴ p-phenylenediamine type ¹⁵ Sulfenamide and guanidine type ¹⁶ 1,6 bis(N, N-dibenzylthiocarbamoyldithio)hexane | | | |

**Table 2**

| **Sample** | **1** | **2** | **3** |
|---|---|---|---|
| Shore | 67 | 70 | 68 |
| Rebound 0°C | 9.0 | 8.1 | 6.7 |
| Rebound 23 °C | 25 | 20 | 18 |
| Rebound 100°C | 58 | 48 | 54 |
| Elongation, % | 539 | 508 | 519 |
| True Tensile, MPa | 121 | 90 | 107 |
| Modulus @ 300%, MPa | 9.7 | 8.3 | 9.8 |
| Tensile MPa | 18.9 | 14.6 | 17.3 |
| | | | |
| Metravib | | | |
| 7.8 Hz, 6% strain, 50 °C G', MPa | 2.6 | 3.6 | 3.2 |
| Tan Delta | 0.22 | 0.23 | 0.22 |
| 7.8 Hz, 6% strain, 0 °C G', MPa | 5.4 | 8.4 | 7.7 |
| Tan Delta | 0.62 | 0.71 | 0.76 |

**Table 3**

| **Sample** | **1** | **2** | **3** |
|---|---|---|---|
| WET BRAKING | 100 | 111 | 121 |
| ROLLING RESISTANCE | 100 | 93 | 97 |

As can be seen from Table 3, the tire having the tread using a compound according to the present invention shows improved rolling resistance and wet braking as compared with the control.

## Claims

1. A pneumatic tire having a tread comprising a rubber composition comprising, expressed as parts by weight per 100 parts by weight of elastomer (phr),
(A) 100 phr of a solution-polymerized styrene-butadiene rubber with a bound styrene content of from 20 to 50 percent by weight, a vinyl 1,2 content of from 10 to 40 percent by weight based on the rubber weight, and a Tg of from -40ºC to - 10ºC;
(B) 5 to 60 phr of a low PCA process oil having a polycyclic aromatic content of less than 3 percent by weight as determined by the IP346 method;
(C) 90 to 150 phr of silica having a CTAB specific surface area (S_{CTAB}) of between 40 and 525 m²/g, and a BET specific surface area (S_{BET}) of between 45 and 550 m²/g;
(D) 10 to 20 phr of sulfur containing organosilicon compound; and
(E) 5 to 30 phr of a polyterpene resin;
wherein the rubber composition is exclusive of polybutadiene, natural rubber, synthetic polyisoprene, and other styrene-butadiene rubbers.

2. The pneumatic tire of claim 1 wherein the rubber composition further comprises:
(F) less than 10 phr of carbon black.

3. The pneumatic tire of claim 1 or 2, wherein the rubber composition is exclusive of elastomers other than the solution-polymerized styrene-butadiene rubber.

4. The pneumatic tire of claim 1, 2 or 3, wherein the rubber composition is exclusive of styrene-butadiene rubbers having at least one of styrene content, vinyl 1,2 content, and Tg outside the ranges noted above for the styrene-butadiene rubber of (A).

5. The pneumatic tire of claim 1, wherein the silica has a CTAB specific surface area (S_{CTAB}) of between 40 and 525 m²/g, and a BET specific surface area (S_{BET}) of between 45 and 550 m²/g.

6. The pneumatic tire of claim 1 or 5, wherein the silica has a BET specific surface area (S_{BET}) between 120 and 280 m²/g or between 200 and 260 m²/g.

7. The pneumatic tire of at least one of the previous claims, wherein the process oil comprises a low PCA process oil having a polycyclic aromatic content of less than 3 percent by weight as determined by the IP346 method, wherein the low PCA oil selected from mild extraction solvates (MES) , treated distillate aromatic extracts (TDAE), or heavy napthenic oils.

8. The pneumatic tire of at least one of the previous claims, wherein said sulfur containing organosilicon compound comprises a compound of the formula:
Z - Alk - Sₙ - Alk - Z I
in which Z is selected from the group consisting of 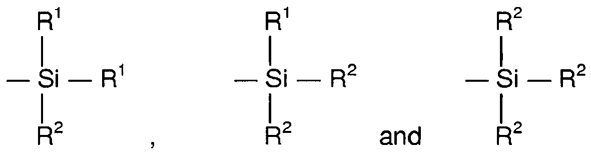 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

9. The pneumatic tire of at least one of the previous claims, wherein said sulfur containing organosilicon compound comprises at least one of 3,3'-bis(triethoxysilylpropyl) disulfide or 3,3'-bis(triethoxysilylpropyl) tetrasulfide.

10. The pneumatic tire of at least one of the previous claims, wherein the silica has a size distribution width L_{d} ((d84-d16)/d50) of objects measured by XDC particle size analysis after ultrasonic disintegration of at least 0.91, and/or a pore volume distribution as a function of the size of the pores such that the ratio V_{(d5-d50)}/V_{(d5-d100)} of at least 0.66.

11. The pneumatic tire of at least one of the previous claims, wherein the silica has
(a) has a size distribution width L'_{d} ((d84-d16)/d50) of objects smaller than 500 nm, measured by XDC particle size analysis after ultrasonic disintegration, of at least 0.95; and a pore volume distribution as a function of the size of the pores such that the ratio V_{(d5-d50)}/V_{(d5-d100)} of at least 0.71; and/or
(b) a pore distribution width Idp of greater than 0.70, and a size distribution width L_{d} ((d84-d16)/d50) of objects measured by XDC particle size analysis after ultrasonic disintegration of at least 0.91.

12. The pneumatic tire of claim 1, wherein the rubber composition comprises from 100 to 130 phr of silica.

13. The pneumatic tire of at least one of the previous claims, wherein the amount of polyterpene resin ranges from 10 to 20 phr.

14. The pneumatic tire of at least one of the previous claims, wherein the amount of carbon black is no more than 2 phr.

15. The pneumatic tire of at least one of the previous claims, wherein the rubber composition comprises from 1 to 4 phr of a α, ω -bis(N,N'-dihydrocarbylthiocarbamamoyldithio)alkane.

## Patentansprüche

1. Luftreifen mit einer Lauffläche, die eine Kautschukzusammensetzung umfasst, umfassend, ausgedrückt als Gewichtsteile je 100 Gewichtsteile Elastomer (ThK):
(A) 100 ThK eines lösungspolymerisierten Styrol-Butadien-Kautschuks mit einem Gehalt an gebundenem Styrol von 20 bis 50 Gewichtsprozent, einem Vinyl-1,2-Gehalt von 10 bis 40 Gewichtsprozent auf Basis des Kautschukgewichts, und einer Tg von -40°C bis -10°C ;
(B) 5 bis 60 ThK eines Prozessöls mit niedrigem PCA-Gehalt mit einem Gehalt an polyzyklischen Aromaten von weniger als 3 Gewichtsprozent, ermittelt durch das IP346-Verfahren;
(C) 90 bis 150 ThK Silika mit einer spezifischen CTAB-Oberfläche (S_{CTAB}) von zwischen 40 und 525 m²/g und einer spezifischen BET-Oberfläche (S_{BET}) von zwischen 45 und 550 m²/g;
(D) 10 bis 20 ThK schwefelhaltige Organosiliziumverbindung; und
(E) 5 bis 30 ThK eines Polyterpenharzes;
wobei die Kautschukzusammensetzung unter Ausschluss von Polybutadien, Naturkautschuk, synthetischem Polyisopren und anderen Styrol-Butadien-Kautschuken ist.

2. Luftreifen nach Anspruch 1, wobei die Kautschukzusammensetzung weiter umfasst:
(F) weniger als 10 ThK Carbon Black.

3. Luftreifen nach Anspruch 1 oder 2, wobei die Kautschukzusammensetzung unter Ausschluss von anderen Elastomeren als dem lösungspolymerisierten Styrol-Butadien-Kautschuk ist.

4. Luftreifen nach Anspruch 1, 2 oder 3, wobei die Kautschukzusammensetzung unter Ausschluss von Styrol-Butadien-Kautschuken ist, die mindestens eines von Styrolgehalt, Vinyl-1,2-Gehalt und Tg außerhalb der vorangehend für den Styrol-Butadien-Kautschuk von (A) festgehaltenen Bereiche aufweisen.

5. Luftreifen nach Anspruch 1, wobei das Silika eine spezifische CTAB-Oberfläche (S_{CTAB}) von zwischen 40 und 525 m²/g und eine spezifische BET-Oberfläche (S_{BET}) von zwischen 45 und 550 m²/g aufweist.

6. Luftreifen von Anspruch 1 oder 5, wobei das Silika eine spezifische BET-Oberfläche (S_{BET}) zwischen 120 und 280 m²/g oder zwischen 200 und 260 m²/g aufweist.

7. Luftreifen nach mindestens einem der vorgenannten Ansprüche, wobei das Prozessöl ein Prozessöl mit niedrigem PCA-Gehalt umfasst, das einen Gehalt an polyzyklischen Aromaten von weniger als 3 Gewichtsprozent, ermittelt durch das IP346-Verfahren, aufweist, wobei das Öl mit niedrigem PCA-Gehalt aus milden Extraktionssolvaten (MES), behandelten Aromatenextrakten aus behandeltem Destillat (TDAE) oder schweren naphthenischen Ölen ausgewählt ist.

8. Luftreifen nach mindestens einem der vorgenannten Ansprüche, wobei die schwefelhaltige Organosiliziumverbindung eine Verbindung enthält mit der Formel:
Z - Alk - Sₙ - Alk - Z I
wobei Z aus der Gruppe ausgewählt ist, bestehend aus 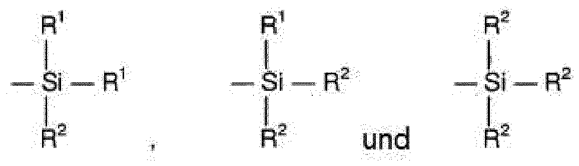 wobei R¹ eine Alkylgruppe von 1 bis 4 Kohlenstoffatomen, Cyclohexyl oder Phenyl ist; R² Alkoxy von 1 bis 8 Kohlenstoffatomen, oder Cycloalkoxy von 5 bis 8 Kohlenstoffatomen ist; Alk ein zweiwertiger Kohlenwasserstoff von 1 bis 18 Kohlenstoffatomen und n eine ganze Zahl von 2 bis 8 ist.

9. Luftreifen nach mindestens einem der vorgenannten Ansprüche, wobei die schwefelhaltige Organosiliziumverbindung mindestens eines von 3,3'-Bis(triethoxysilylpropyl)disulfid oder 3,3'-Bis(triethoxysilylpropyl)tetrasulfid umfasst.

10. Luftreifen nach mindestens einem der vorgenannten Ansprüche, wobei das Silika eine Größenverteilungsbreite L_{d} ((d84-d16)/d50) von Gegenständen, gemessen durch XDC-Partikelgrößenanalyse nach Ultraschall-Desintegration, von mindestens 0,91 aufweist, und/oder eine solche Porenvolumenverteilung in Funktion der Größe der Poren, dass das Verhältnis V_{(d5}-_{d50)}/V_{(d5-d100)} mindestens 0,66 beträgt.

11. Luftreifen nach mindestens einem der vorgenannten Ansprüche, wobei das Silika
(a) eine Größenverteilungsbreite Ld' ((d84-d16)/d50) von Gegenständen kleiner als 500 nm, gemessen durch XDC-Partikelgrößenanalyse nach Ultraschall-Desintegration, von mindestens 0,95 aufweist; und/oder eine solche Porenvolumenverteilung in Funktion der Größe der Poren, dass das Verhältnis V_{(d5-d50)}/V_{(d5-d100)} mindestens 0,71 beträgt; und/oder
(b) eine Porenverteilungsbreite Idp von größer als 0,70 und eine Größenverteilungsbreite L_{d} ((d84-d16)/d50) von Gegenständen, gemessen durch XDC-Partikelgrößenanalyse nach Ultraschall-Desintegration, von mindestens 0,91 aufweist.

12. Luftreifen nach Anspruch 1, wobei die Kautschukzusammensetzung 100 bis 130 ThK Silika umfasst.

13. Luftreifen nach mindestens einem der vorgenannten Ansprüche, wobei die Polyterpenharzmenge sich auf 10 bis 20 ThK beläuft.

14. Luftreifen nach mindestens einem der vorgenannten Ansprüche, wobei die Carbon Black-Menge nicht mehr als 2 ThK beträgt.

15. Luftreifen nach mindestens einem der vorgenannten Ansprüche, wobei die Kautschukzusammensetzung 1 bis 4 ThK eines α,ω-Bis(N,N'-dihydrocarbylthiocarbamamoyldithio)alkans umfasst.

## Revendications

1. Bandage pneumatique possédant une bande de roulement comprenant une composition de caoutchouc comprenant, exprimées sous la forme de parties en poids par 100 parties en poids d'élastomère (phr) :
(A) 100 phr de caoutchouc de styrène-butadiène polymérisé en solution possédant une teneur en styrène lié de 20 à 50 % en poids, une teneur en groupes vinyle en position 1,2 de 10 à 40 % poids, basés sur le poids du caoutchouc, et une valeur Tg de -40 °C à -10 °C ;
(B) de 5 à 60 phr d'une huile plastifiante à faible teneur en PCA possédant une teneur en composés polycycliques aromatiques inférieure à 3 % en poids comme déterminé par le procédé IP346 ;
(C) de 90 à 150 phr d'une silice possédant une aire de surface spécifique CTAB (S_{CTAB}) entre 40 et 525 m²/g et une aire de surface spécifique BET (S_{BET}) entre 40 et 550 m²/g ;
(D) de 10 à 20 phr d'un composé d'organosilicium contenant du soufre ; et
(E) de 5 à 30 phr d'une résine polyterpénique ;
dans lequel la composition de caoutchouc ne contient pas de polybutadiène, de caoutchouc naturel, de polyisoprène synthétique et d'autres caoutchoucs de styrène-butadiène.

2. Bandage pneumatique selon la revendication 1, dans lequel la composition de caoutchouc comprend en outre :
(F) moins de 10 phr de noir de carbone.

3. Bandage pneumatique selon la revendication 1 ou 2, dans lequel la composition de caoutchouc ne contient pas d'élastomère autre que le caoutchouc de styrène-butadiène que l'on obtient par polymérisation en solution.

4. Bandage pneumatique selon la revendication 1 ou 2, dans lequel la composition de caoutchouc ne contient pas de caoutchoucs de styrène-butadiène dont au moins un membre choisi parmi le groupe comprenant une teneur en styrène, une teneur en groupes vinyle en position 1,2 et une valeur Tg se trouve en dehors des plages indiquées ci-dessus, pour le caoutchouc de styrène-butadiène de (A).

5. Bandage pneumatique selon la revendication 1, dans lequel la silice possède une air de surface spécifique CTAB (S_{CTAB}) entre 40 et 525 m²/g et une aire de surface spécifique BET (S_{BET}) entre 40 et 550 m²/g.

6. Bandage pneumatique selon la revendication 1 ou 5, dans lequel la silice possède une aire de surface spécifique BET (S_{BET}) entre 120 et 280 m²/g ou entre 200 et 260 m²/g.

7. Bandage pneumatique selon au moins une des revendications précédentes, dans lequel l'huile plastifiante comprend une huile plastifiante à faible teneur en PCA possédant une teneur en composés polycycliques aromatiques inférieure à 3 % en poids comme déterminé par le procédé IP346, l'huile plastifiante à faible teneur en PCA étant choisie parmi des solvates d'extraction modérée (MES), des extraits aromatiques de distillats traités (TDAE) ou des huiles naphténiques lourdes.

8. Bandage pneumatique selon au moins une des revendications précédentes, dans lequel ledit composé d'organosilicium contenant du soufre comprend un composé répondant à la formule :
Z - Alk - Sₙ - Alk - Z I
dans laquelle Z est choisi parmi le groupe constitué par : 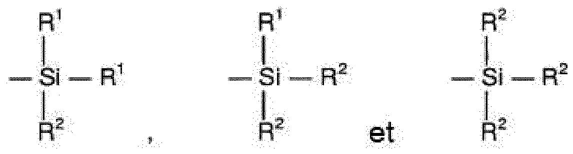 formules dans lesquelles R¹ représente un groupe alkyle contenant de 1 à 4 atomes de carbone, un groupe cyclohexyle ou un groupe phényle ; R² représente un groupe alcoxy contenant de 1 à 8 atomes de carbone ou un groupe cycloalcoxy contenant de 5 à 8 atomes de carbone ; Alk représente un groupe d'hydrocarbure divalent contenant de 1 à 18 atomes de carbone et n représente un entier de 2 à 8.

9. Bandage pneumatique selon au moins une des revendications précédentes, dans lequel ledit composé d'organosilicium contenant du soufre comprend au moins un composé choisi parmi le 3,3'-bis(triéthoxysilylpropyl) disulfure ou le 3,3'-bis(triéthoxysilylpropyl) tétrasulfure.

10. Bandage pneumatique selon au moins une des revendications précédentes, dans lequel la silice possède une plage granulométrique L_{d} ((d84-d16/d50) d'objets mesurée par analyse granulométrique XDC après désintégration par ultrasons, d'au moins 0,91 et une distribution du volume des pores, en fonction de la dimension des pores, telle que le rapport V_{(d5-d50)}/V_{(d5-d100}) s'élève à au moins 0,66.

11. Bandage pneumatique selon au moins une des revendications précédentes, dans lequel la silice possède
(a) une plage granulométrique L'_{d} ((d84-d16/d50) d'objets inférieurs à 500 nm, mesurée par analyse granulométrique XDC après désintégration par ultrasons, d'au moins 0,95, et une distribution du volume des pores, en fonction de la dimension des pores, telle que le rapport V_{(d5-d50)}/V_{(d5-d100)} s'élève à au moins 0,71 ;
(b) une plage de distribution des pores ldp supérieure à 0,70, et une plage granulométrique L_{d} ((d84-d16/d50) d'objets mesurée par analyse granulométrique XDC après désintégration par ultrasons, d'au moins 0,91.

12. Bandage pneumatique selon la revendication 1, dans lequel la composition de caoutchouc comprend de 100 à 130 phr de silice.

13. Bandage pneumatique selon au moins une des revendications précédentes, dans lequel la quantité de la résine polyterpénique se situe dans la plage de 10 à 20 phr.

14. Bandage pneumatique selon au moins une des revendications précédentes, dans lequel la quantité de noir de carbone n'est pas supérieure à 2 phr.

15. Bandage pneumatique selon au moins une des revendications précédentes, dans lequel la composition de caoutchouc comprend de 1 à 4 phr d'un α,ω-bis(N,N'-dihydrocarbylthiocarbamoyldithio)-alcane.
